# EUROPÄISCHE PATENTANMELDUNG

(11) **EP 1 186 862 A2**
(43) Veröffentlichungstag der Anmeldung: **13.03.2002**
(21) Anmeldenummer: 01120393.2
(22) Anmeldetag: 25.08.2001
(51) Int. Cl.: G01C 21/26, G08G 1/0968

(54) **Verfahren zur Routenberechnung**

(30) Priorität: 05.09.2000 DE 10043578
(71) Anmelder: ROBERT BOSCH GMBH, 70442 Stuttgart (DE)
(72) Erfinder: Schenk, Joachim, 38536 Meinersen-Ohof (DE); Aumayer, Richard, 31199 Diekholzen (DE); Rychlak, Stefan, 31241 Ilsede (DE)

(57) **Zusammenfassung**

Es wird ein Verfahren zur Berechnung einer Route von einem Start- zu einem Zielort für ein Fortbewegungsmittel unter Verwendung Verkehrswege beschreibender Verkehrswegeinformationen vorgeschlagen, bei dem in Abhängigkeit einer Eigenschaft des Fortbewegungsmittels, die eine Beschränkung hinsichtlich der Benutzung bestimmter Verkehrswege begründet, eine Teilmenge der Verkehrswegeinformationen von der Routenberechnung ausgenommen wird.

## Beschreibung

### Stand der Technik

Die Erfindung geht von einem Verfahren zur Berechnung einer Route von einem Start- zu einem Zielort für ein Fortbewegungsmittel unter Verwendung Verkehrswege beschreibender Verkehrswegeinformationen nach der Gattung des unabhängigen Patentanspruchs aus.

Heutige, beispielsweise von Firma Blaupunkt-Werke GmbH, Hildesheim, angebotene und vertriebene Fahrzeugnavigationsgeräte ermöglichen nach Eingabe eines Zielorts durch den Benutzer eine automatische Routenberechnung vom aktuellen Fahrzeugstandort zum eingegebenen Zielort und leiten den Fahrzeugführer durch Ausgabe vorzugsweise akustischer Fahrtanweisungen vom jeweiligen momentanen Fahrzeugstandort entlang der berechneten Fahrtroute zum Zielort.

Die Routenberechnung erfolgt dabei üblicherweise unter Verwendung einer in einem Massenspeicher abgelegten Datenbasis, die Verkehrswege beschreibende Verkehrswegeinformationen enthält. Diese beschreiben gewöhnlich ein Verkehrswegenetz, welches durch Kreuzungen oder Einmündungen verbindende Streckenabschnitte gebildet wird, darüber hinaus Informationen über die Länge der Streckenabschnitte und die Streckenabschnitte betreffende Beschränkungen, wie Höchstgeschwindigkeitswerte und Fahrtrichtungsbeschränkungen im Falle von Einbahnstraßen.

Beschriebene Navigationsgeräte gemäß dem Stand der Technik berechnen im Falle von Fortbewegungsmitteln, die aufgrund mindestens einer ihrer Eigenschaften hinsichtlich der Benutzung von Verkehrswegen einer Beschränkung unterliegen, unter Umständen zumindest teilweise unbrauchbare Fahrtrouten. So sind beispielsweise Fahrtrouten für Gefahrenguttransporte, die durch für Gefahrenguttransporte gesperrte Naturschutzgebiete führen, unbrauchbar. Abgesehen von damit regelmäßig verbundenen Umwegen ist die Berechnung einer Alternativroute vom Rand eines Naturschutzgebiets aus oftmals nicht ohne weiteres möglich, so daß der Führer des Gefahrenguttransports auf das Studium von Straßenkarten oder andere Hilfsmittel angewiesen ist.

### Vorteile der Erfindung

Das erfindungsgemäße Verfahren mit den Merkmalen des unabhängigen Patentanspruchs ermöglicht demgegenüber in vorteilhafter Weise eine angepaßte Routenberechnung für Fortbewegungsmittel, die aufgrund mindestens einer ihrer Eigenschaften hinsichtlich der Benutzung von Verkehrswegen einer Beschränkung unterliegen. Dies wird erfindungsgemäß dadurch erreicht, dass in Abhängigkeit einer Eigenschaft des Fortbewegungsmittels, die eine Beschränkung hinsichtlich der Benutzung bestimmter Verkehrswege begründet, eine Teilmenge der Verkehrswegeinformationen von der Routenberechnung ausgenommen wird.

Gemäß einer besonders vorteilhaften Ausführungsform der Erfindung erstreckt sich die Beschränkung hinsichtlich der Benutzung bestimmter Verkehrswege auf alle Fortbewegungsmittel oder alle Fortbewegungsmittel mindestens einer bestimmten Kategorie, die nicht über eine von der Beschränkung ausnehmende Eigenschaft verfügen. Damit erschließt sich die Verwendung von Fahrzeugnavigationsgeräten auch für Zielgruppen oder Fortbewegungsmittel, für die bislang Navigationsgeräte nicht zur Verfügung standen. Beispielsweise kann es sich bei den Fortbewegungsmittel mindestens einer bestimmten Kategorie um Fahrzeuge handeln, wobei beispielsweise Fahrräder gegenüber Kraftfahrzeugen wie Motorrädern, Pkw oder Lkw hinsichtlich der Nutzung von Verkehrswegen niedrigerer Kategorien, beispielsweise Fahrradwegen oder speziell gekennzeichneten Einbahnstraßen, geringeren Einschränkungen unterworfen sind. Weiter können beispielsweise Kraftfahrzeuge für den land-oder forstwirtschaftlichen Verkehr geringeren Einschränkungen unterworfen sein, als über entsprechende Ausnahmegenehmigungen nicht verfügende Kraftfahrzeuge.

Von besonderem Vorteil ist es, wenn die beschränkende Eigenschaft durch eine Sensorik des Fortbewegungsmittels automatisch erfaßt wird.

Verfügt ein Fortbewegungsmittel nicht über eine geeignete Sensorik zur Feststellung einer beschränkenden Eigenschaft, so ist es von Vorteil, statt dessen die beschränkende Eigenschaft durch eine bezüglich des Fortbewegungsmittels externe Sensorik zu erfassen und über eine Schnittstelle dem Fortbewegungsmittel mitzuteilen.

Weiter ist es von Vorteil, wenn die beschränkende Eigenschaft, beispielsweise im Falle unveränderlicher äußerer Abmessungen des Fortbewegungsmittels, fest, oder im Falle wechselnder beschränkender Eigenschaften, wie beispielsweise wechselnder Beladung des Fortbewegungsmittels, eigenschaftsabhängig, in einen Speicher des Fortbewegungsmittels einprogrammiert wird.

Da eine für das erfindungsgemäße Verfahren benötigte Datenbasis gegenüber der Datenbasis herkömmlicher Navigationsgeräte gemäß dem Stand der Technik wegen der erforderlichen, Verkehrswegen zugeordneten Beschränkungsinformationen einen erhöhten Speicherplatzbedarf aufweist, kann es weiterhin von Vorteil sein, die Datenbasis außerhalb des erfindungsgemäßen Navigationsgeräts anzuordnen.

Gemäß einer ersten vorteilhaften Ausführungsform dieser Weiterbildung ist vorgesehen, dass die beschränkende Eigenschaft vom Fortbewegungsmittel über eine Schnittstelle einer Zentrale übermittelt wird, dass aufgrund der in einer Datenbasis der Zentrale verfügbaren Verkehrswege beschreibenden Verkehrswegeinformationen eine Fahrtroute unter Berücksichtigung der beschränkenden Eigenschaft berechnet wird, und dass die berechnete Fahrtroute beschreibende Routeninformationen über die Schnittstelle an das Fortbewegungsmittel übermittelt werden. Diese erste Ausführungsform, die im folgenden auch als Offboard-Routenberechnung bezeichnet wird, bietet den Vorteil, im Fortbewegungsmittel selbst keine Datenbasis bevorraten zu müssen. Die in der Zentrale verfügbare Datenbasis kann weiter beständig durch Berücksichtigung aktueller Verkehrswegeinformationen, wie neuer Verkehrswege, veränderter Beschränkungen betreffend die Benutzung bestimmter Verkehrswege, aktuelle Verkehrsbehinderungen auf bestimmten Verkehrswegen und weiterer für die Routenberechnung relevanter Informationen gepflegt werden. Diese Ausführungsform bietet ferner den Vorteil, im Fortbewegungsmittel keinen eigenen Rechner zur Routenberechnung vorhalten zu müssen. Darüber hinaus kann auf einfache Weise auch die in der Zentrale vorgehaltene Routenberechnungssoftware ständig auf dem aktuellsten Stand gehalten werden.

Eine zweite vorteilhafte Ausführungsform dieser Weiterbildung sieht vor, dass die beschränkende Eigenschaft vom Fortbewegungsmittel über eine Schnittstelle einer Zentrale übermittelt wird, dass nach Abzug der Teilmenge von Verkehrswegeinformationen von in einer Datenbasis der Zentrale verfügbaren Verkehrswege beschreibenden Verkehrswegeinformationen verbleibende Verkehrswegeinformationen zur Routenberechnung über die Schnittstelle an das Fortbewegungsmittel übermittelt werden. Für die fortbewegungsmittelseitige Routenberechnung stehen mithin nur solche Verkehrswegeinformationen zur Verfügung, die Verkehrswege beschreiben, die unter Berücksichtigung der beschränkenden Eigenschaft(en) des Fortbewegungsmittels durch dieses tatsächlich genutzt werden können. Die fortbewegungsmittelseitige Datenbasis bevorratet mithin einen ausgedünnten Datenbestand, der von ohnehin nicht nutzbaren Verkehrswegen beschreibenden Verkehrswegeinformationen befreit ist. Dies bewirkt im Falle herkömmlich zur Routenberechnung verwendeter Algorithmen, wie des Dijkstra-Algorithmus, zusätzlich eine Reduzierung der für die Routenberechnung erforderlichen Rechenkapazität und mithin Rechenzeit, da die Zahl der Knoten, also Kreuzungen oder Einmündungen verbindenden Kanten, also Verkehrswege, um die aufgrund der eigenschaftsbedingten Beschränkungen nicht verwendbaren Verkehrswege reduziert ist. Im Vergleich zur vorstehend beschriebenen Offboard-Routenberechnung ergibt sich weiterhin der Vorteil eines geringeren, zwischen Zentrale und Fortbewegungsmittel zu übertragenden Datenaufkommens.

Eine dritte vorteilhafte Ausführungsform dieser Weiterbildung ergibt sich dadurch, dass die beschränkende Eigenschaft vom Fortbewegungsmittel über eine Schnittstelle einer Zentrale übermittelt wird, in einer Datenbasis der Zentrale, die über Verkehrswege beschreibende Verkehrswegeinformationen verfügt, aufgrund der beschränkenden Eigenschaft von der Routenberechnung auszunehmende Verkehrswegeinformationen ermittelt werden, dass auszunehmende Verkehrswegeinformationen kennzeichnende Informationen über die Schnittstelle an das Fortbewegungsmittel übermittelt werden, und dass im Fortbewegungsmittel die Routenberechnung unter Ausnahme der durch die kennzeichnenden Informationen markierten Verkehrswegeinformationen erfolgt. Diese Ausführungsform ermöglicht in besonders einfacher Weise die Verwendung herkömmlicher Datenbasen, wie sie für Navigationsgeräte gemäß dem Stand der Technik vorzugsweise auf CDs verfügbar sind. Durch die Ausnahme markierter Verkehrswege von der Routenberechnung ergibt sich wie im Fall der zweiten Ausführungsform ein reduzierter Rechenaufwand für die Routenberechnung.

### Zeichnungen

Ausführungsbeispiele der Erfindung sind in den Figuren dargestellt und werden nachfolgend näher erläutert.

### Es zeigen

Figur 1 ein Blockschaltbild des erfindungswesentlichen Teils eines Navigationsgeräts zur Durchführung des erfindungsgemäßen Verfahrens zur Routenberechnung,
Figur 2 einen Ablaufplan des erfindungsgemäßen Verfahrens und
Figur 3 ein Blockschaltbild des erfindungswesentlichen Teils einer Weiterbildung eines Navigationsgeräts zur Durchführung des erfindungsgemäßen Verfahrens zur Routenberechnung.

### Beschreibung der Ausführungsbeispiele

Grundgedanke der vorliegenden Erfindung ist die Schaffung eines Verfahrens zur Berechnung einer Route von einem Startzu einem Zielort für ein Fortbewegungsmittel unter Verwendung Verkehrswege beschreibender Verkehrswegeinformationen zu schaffen, welches sich dadurch auszeichnet, dass in Abhängigkeit einer Eigenschaft des Fortbewegungsmittels, die eine Beschränkung hinsichtlich der Benutzung bestimmter Verkehrswege begründet, eine Teilmenge der Verkehrswegeinformationen von der Routenberechnung ausgenommen wird.

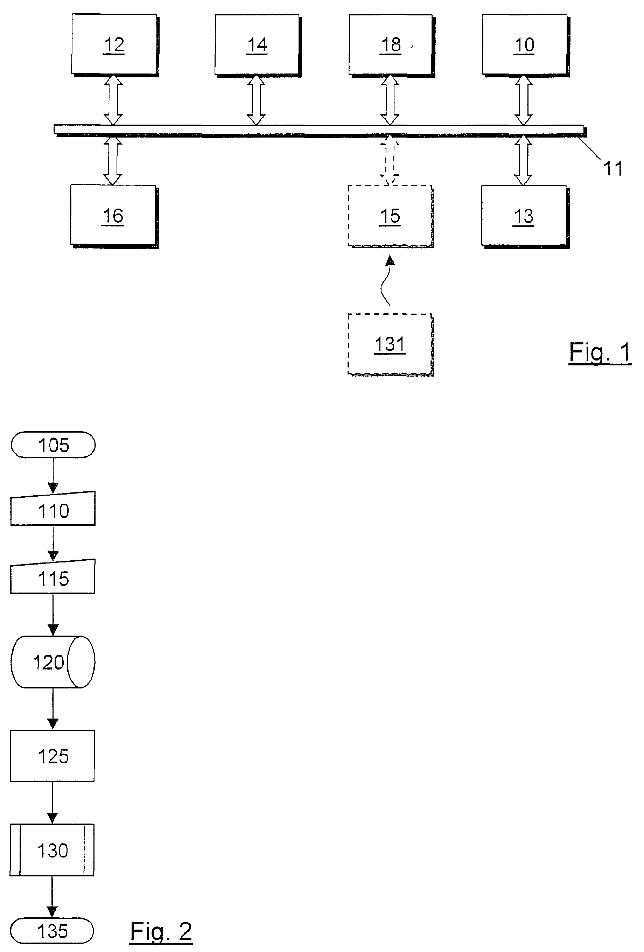

Die Erfindung wird nachfolgend am Beispiel eines Navigationsgeräts für Kraftfahrzeuge, hier speziell am Beispiel eines für den Einsatz in einem Gefahrenguttransporter, wie beispielsweise einem Tanklastzug, vorgesehenen Navigationsgeräts, näher erläutert. Ein Blockschaltbild des Navigationsgeräts 1 ist in Figur 1 dargestellt.

Das dargestellte Navigationsgerät 1 zur Durchführung des erfindungsgemäßen Verfahrens verfügt über Positionsbestimmungsmittel 12 zur Feststellung eines aktuellen Standorts des Navigationsgeräts oder des Fahrzeugs, in dem das Navigationsgerät betrieben wird.

Die Positionsbestimmungsmittel 12 umfassen in an sich bekannter Weise Mittel zur Durchführung einer sogenannten Koppelortung, das heißt, dass aus einer zurückgelegten Wegstrecke und einer Fahrtrichtungsinformation der jeweils aktuelle Fahrzeugstandort ermittelt wird.

Zur Bestimmung der zurückgelegten Wegstrecke wird beispielsweise das Tachometersignal ausgewertet. Dieses wird wiederum in bekannter Weise aus Impulsen von Radsensoren eines ABS (= Anti-Blockier-Systems), die in Abhängigkeit der Drehung eines Fahrzeugrades eine Impulsfolge erzeugen, und einem bekannten Radumfang bestimmt. Die Richtungsinformation wird mittels eines Drehratensensors ermittelt, der Richtungsänderungen erfaßt, so dass ausgehend von einer bekannten Ausgangsfahrtrichtung aufgrund einer Drehratenänderung des Drehratensensors die jeweils aktuelle Fahrtrichtung bestimmbar ist. Aus den die Fahrtrichtung und eine zurückgelegte Wegstrecke repräsentierenden Informationen ist der jeweils aktuelle Standort des Fahrzeugs berechenbar.

Die Positionsbestimmungsmittel 12 umfassen weiterhin einen Empfänger für GPS-(= Global Positioning System-)Signale, also über Satelliten zur Positionsbestimmung ausgestrahlte Signale, aus denen ebenfalls die jeweils aktuelle Fahrzeugposition bestimmbar ist.

Die Positionsbestimmungsmittel 12 umfassen ferner eine Recheneinheit, die die Positionsinformationen des GPS-Empfängers mit denen der Koppelortung zu einer resultierenden Fahrzeugposition verknüpft. Weiter gleichen die Positionsbestimmungsmittel die so ermittelte Fahrzeugposition im Sinne einer Plausibilitätsprüfung mit in einem Massenspeicher 14 gespeicherten Verkehrswegeinformationen ab und bestimmen so einen wahrscheinlichsten aktuellen Fahrzeugstandort. Dieser letzte Schritt ist unter dem Schlagwort Map Matching bekannt.

Die von den Positionsbestimmungsmitteln 12 ermittelte Information über den aktuellen Fahrzeugstandort ist einer Steuerung 10 zugeführt, deren Funktion später näher erläutert wird.

Der Massenspeicher 14 des Navigationsgeräts 1 ist vorzugsweise in Form eines CD-ROM-Laufwerks mit eingelegter Daten-CD realisiert, anderweitige Ausführungsformen des Massenspeichers 14 sind jedoch denkbar. Im Massenspeicher 14 sind Karteninformationen, insbesondere Informationen über die Lage markanter Punkte, wie zum Beispiel von Orten und Städten zusammen mit zugehörigen, die markanten Punkte eindeutig kennzeichnenden Ortsnamen abgelegt. Weiter sind im Massenspeicher Informationen über die markanten Punkte verbindende Verkehrswege, wie Autobahnen, Bundesstraßen und Straßen niederwertigerer Klassen beschreibende Verkehrswegeinformationen gespeichert. Die Verkehrswegeinformationen umfassen vorzugsweise Informationen über auf den Verkehrswegen zulässige Höchstgeschwindigkeits- oder Durchschnittsgeschwindigkeitswerte, darüber hinaus erfindungsgemäß Informationen über Einschränkungen betreffend die Nutzung der Verkehrswege. Diese können beispielsweise Einbahnstraßenregelungen, für bestimmte Fahrzeuge, wie Lkw, Gefahrenguttransporte usw. gesperrte Verkehrswege oder anderweitige Informationen umfassen.

Weiterhin umfaßt das Navigationsgerät eine Benutzerschnittstelle 16, die über eine Eingabevorrichtung, vorzugsweise in Form einer Tastatur, und eine, vorzugsweise optische und akustische, Ausgabevorrichtung verfügt.

Die Eingabevorrichtung der Benutzerschnittstelle 16 dient der Eingabe eines Zielorts, zu dem eine Fahrtroute berechnet und anschließend der Fahrzeugführer geleitet werden soll. Weiter dient die Benutzerschnittstelle gemäß einer einfachen ersten Ausführungsform der Erfindung der Eingabe einer Eigenschaft des Fahrzeugs, die eine Beschränkung hinsichtlich der Benutzung bestimmter Verkehrswege oder Streckenabschnitte bedingt. Im vorliegenden Fall eines Gefahrenguttransporters besteht diese beschränkende Eigenschaft in der Beladung des Fortbewegungsmittels, nämlich des zu transportierten Gefahrenguts. Eine manuelle Eingabe der beschränkenden Eigenschaft kann in diesem Fall durchaus sinnvoll sein, da ein beladener Gefahrenguttransport beispielsweise bestimmten Beschränkungen hinsichtlich der Benutzung bestimmter Verkehrswege unterliegt, während eine Leerfahrt desselben Transporters möglicherweise keinerlei Beschränkungen unterworfen ist.

Die Ausgabevorrichtung unterstützt den Benutzer bei der Eingabe des Zielorts dergestalt, dass beispielsweise die bereits eingegebenen Buchstaben eines Ortsnamens auf der Ausgabevorrichtung optisch dargestellt werden. Weiter können aufgrund der bereits eingegebenen Buchstaben ausgewählte Vorschläge für Ortsnamen zur Auswahl durch den Benutzer angeboten werden. Die Ausgabevorrichtung dient des weiteren der vorzugsweise akustischen Ausgabe von Zielführungshinweisen zur Leitung des Fahrzeugführers entlang der berechneten Fahrtroute. Diese Zielführungshinweise enthalten vorzugsweise Hinweise zum Abbiegen von einer aktuell befahrenen auf eine andere Straße und Hinweise auf eine Entfernung bis zum Abbiegepunkt, etwa in der Art "nach 100 Metern links abbiegen" o. ä..

Weiterhin verfügt das Navigationsgerät 1 über einen Eigenschaftsspeicher 18, in dem eine oder mehrere über die Benutzerschnittstelle 16 eingegebene beschränkende Eigenschaft(en) des Fortbewegungsmittels, oder eine oder mehrere diese beschreibenden Information(en) abgelegt wird oder werden. Im vorliegenden Fall eines mit Gefahrengut beladenen Gefahrenguttransporters wird im Speicher 18 folgerichtig ein Eintrag "Gefahrenguttransport" abgelegt.

Die beschriebenen Komponenten, nämlich die Positionsbestimmungsmittel 12, der Massenspeicher 14, die Benutzerschnittstelle 16 und der Eigenschaftsspeicher 18 greifen auf einen Datenbus 11 des Navigationsgeräts 1 zu, der an eine Steuerung 10 des Navigationsgeräts 1 angeschlossen ist und vorzugsweise von dieser gesteuert wird. Darüber hinaus können einzelne Komponenten selbsttätig mit anderen Komponenten kommunizieren, so kann beispielsweise der Rechner der Positionsbestimmungsmittel 12 selbsttätig auf den Massenspeicher 14 zugreifen, um für das Map Matching benötigte Kartendaten aus dem Massenspeicher 14 abzurufen.

Zur Vermeidung von Zugriffskonflikten bei Zugriffen auf den Datenbus 11 werden die Zugriffe nach einem geeigneten Protokoll, etwa dem an sich bekannten CSMA/CD-(= carrier sense multiple access/collision detection)-Protokoll abgewickelt.

Die Steuerung 10 dient der Steuerung der Funktionen des Navigationsgeräts 1 und ist vorzugsweise in Form eines in einem Mikroprozessor implementierten Betriebsprogramms realisiert. Im Zusammenhang mit der vorliegenden Erfindung kommen der Steuerung 10 neben den von herkömmlichen Navigationsgeräten bekannten die Aufgaben
- Übernahme der über die Benutzerschnittstelle 16 eingegebenen Eigenschaft des Fortbewegungsmittels, die eine Einschränkung seines Betriebs auf bestimmten Verkehrswegen bedingt,
- Ablegen der beschränkenden Eigenschaft im Eigenschaftsspeicher 18 des Navigationsgeräts,
- Vergleich der im Eigenschaftsspeicher 18 abgelegten Eigenschaft des Fortbewegungsmittels mit im Massenspeicher 14 abgelegten Informationen über Beschränkungen hinsichtlich der Nutzung einzelner Verkehrswege, vorzugsweise im Zuge der Routenberechnung,
- Ausnahme solcher Verkehrswege von der Routenberechnung, die aufgrund der beschränkenden Eigenschaft des Fortbewegungsmittels, die im Speicher 18 abgelegt ist, für das Fortbewegungsmittel aktuell nicht nutzbar sind,
wie später im Zusammenhang mit der Beschreibung des erfindungsgemäßen Verfahrens näher erläutert, zu.

Bei einer alternativen Ausführungsform des beschriebenen Navigationsgeräts 1 zur Durchführung des erfindungsgemäßen Verfahrens ist an den Datenbus 11 eine Sensorik 13 zur automatischen Erfassung einer beschränkenden Eigenschaft des Fortbewegungsmittels angeschlossen. Im Falle des beschriebenen Gefahrenguttransporters kann diese Sensorik beispielsweise in Form eines Gewichtssensors realisiert sein, der feststellt, ob der Transporter beladen ist.
Alternativ kann der Sensor auch als chemischer Sensor ausgeführt sein, der ein der chemischen Zusammensetzung der Ladung entsprechendes Signal abgibt. Im Falle einer eine Beschränkung bewirkenden Eigenschaft, hier Beladung, des Fortbewegungsmittels wird das Ausgangssignal der Sensorik 13 oder eine daraus abgeleitete beschränkende Eigenschaft über den Datenbus 11 des Navigationsgeräts in den Eigenschaftsspeicher 18 eingeschrieben.

Bei einer weiteren alternativen Ausführungsform kann es demgegenüber vorgesehen sein, daß die beschränkende Eigenschaft des Fortbewegungsmittels durch eine bezüglich des Fortbewegungsmittels externe Sensorik 131 erfaßt wird. Dies kann beispielsweise eine Lkw-Waage sein, die aufgrund der Differenz zwischen tatsächlichem Gewicht und Leergewicht eines Gefahrenguttransporters ermittelt, ob dieser beladen ist. Ebenso kann es sich beispielsweise um eine Vermessungsanlage handeln, die automatisch beispielsweise die Höhe, Breite oder Länge oder mehrere dieser Merkmale des Fortbewegungsmittels oder des Fortbewegungsmittels inklusive Beladung ermittelt, und somit beispielsweise Übermaße des Fortbewegungsmittels, die eine Beschränkung hinsichtlich der Benutzung bestimmter Verkehrswege bedingen, feststellt. Die Signale der externen Sensorik 131 sind dem Navigationsgerät 1 über eine an den Datenbus 11 angeschlossene Kommunikationsschnittstelle 15, die vorzugsweise in Form einer Funk- oder Infrarot-Luftschnittstelle ausgeführt ist, übermittelbar. Ein über die Kommunikationsschnittstelle 15 empfangenes, eine beschränkende Eigenschaft anzeigendes Signal wird über den Datenbus 11 in den Eigenschaftsspeicher 18 eingeschrieben.

Schließlich kann die beschränkende Eigenschaft, beispielsweise im Falle eines Lkws dessen äußere Abmessungen, herstellerseitig fest in den Eigenschaftsspeicher 18 einprogrammiert sein. Dies ist insbesondere im Falle invariabler Eigenschaften des Fortbewegungsmittels von Vorteil, da die Erfassung der Eigenschaften des Fortbewegungsmittel und damit die dazu erforderliche Sensorik 13 oder 131 und gegebenenfalls die Kommunikationsschnittstelle 15 zur Übermittlung der Eigenschaften an das Navigationsgerät 1 entbehrlich sind.

Das erfindungsgemäße Verfahren zur Routenberechnung wird nachfolgend anhand des Ablaufplans gemäß Figur 2 erläutert. Die Abfolge der Schritte in der beschriebenen Reihenfolge ist nicht zwingend, sondern nur beispielhaft.

Nach Inbetriebnahme des Navigationsgeräts (Schritt 105) und Eingabe eines Zielorts über die Eingabemittel der Benutzerschnittstelle 16, zu dem eine Route, im Fall des Gefahrenguttransport-Lkw eine Fahrtroute, berechnet werden soll (Schritt 110), wird der Fahrzeugführer zur Eingabe einer beschränkenden Eigenschaft, beispielsweise einer Beladung mit Gefahrengut, zur Änderung eines bestehenden Eintrags, beispielsweise infolge einer Änderung der Beladung, die eine abweichende Gefahrenklasse mit sich bringt, oder zur Eingabe einer Fehlanzeige, für den Fall, dass eine Beschränkung aufgrund der aktuellen Fahrzeugeigenschaften nicht erforderlich ist, weil beispielsweise das Fahrzeug nicht beladen ist, über die Benutzerschnittstelle 16 aufgefordert. Nach Eingabe der aktuellen beschränkenden Eigenschaft oder einer Fehlanzeige (Schritt 115) wird die aktuelle Fahrzeugeigenschaft in den Eigenschaftsspeicher 18 eingeschrieben (Schritt 120). Anschließend wird mittels der Positionsbestimmungsmittel 12 der aktuelle Fahrzeugstandort bestimmt (Schritt 125). Es schließt sich die eigentliche Routenberechnung an (Schritt 130), nach deren Abschluß der Ablauf mit dem eigentlichen Zielführungsvorgang, der für vorliegende Erfindung ohne Belang ist, ab (Schritt 135).

Die Routenberechnung erfolgt vom aktuellen Standort des Fortbewegungsmittels, also hier des Gefahrenguttransport-Lkw, zum vom Benutzer eingegebenen Zielort unter Verwendung der im Massenspeicher verfügbaren Verkehrswegeinformationen und unter zusätzlicher Berücksichtigung im Eigenschaftsspeicher 18 abgelegter, eine Nutzung von Verkehrswegen einschränkender Eigenschaften dergestalt, dass solche Verkehrswege, die für Fortbewegungsmittel mit der einschränkenden Eigenschaft nicht nutzbar sind, von der Routenberechnung ausgenommen werden.

Im Fall des Gefahrenguttransporters können solche Beschränkungen beispielsweise durch Landschafts- oder Naturschutzgebiete führende Straßen betreffen, die für Gefahrenguttransporte gesperrt sind. Weiter können die Beschränkungen auch durch bauliche Gegebenheiten, wie eine Durchfahrthöhe unter einer Brücke, die eine Nutzung durch Fahrzeuge mit Übermaßen unmöglich macht, vorgegeben sein.

Dazu vergleicht die Steuerung 10 die in der Datenbasis des Massenspeichers 14 verfügbaren Verkehrswegeinformationen mit der im Eigenschaftsspeicher 18 abgelegten einschränkenden Eigenschaft. Wird bei einem für die Routenberechnung in Frage kommenden Verkehrsweg festgestellt, dass dieser aufgrund einer in der Datenbasis gespeicherten Verkehrswegeinformation für Fortbewegungsmittel mit der im Eigenschaftsspeicher 18 gespeicherten Eigenschaft nicht nutzbar ist, so wird dieser nachfolgend für die Routenberechnung nicht mehr berücksichtigt.

Eine Weiterbildung der Erfindung sieht vor, dass sich die Beschränkung hinsichtlich der Benutzung bestimmter Verkehrswege auf alle Fortbewegungsmittel oder alle Fortbewegungsmittel mindestens einer bestimmten Kategorie erstreckt, die nicht über eine von der Beschränkung ausnehmende Eigenschaft verfügen. Beispielsweise existieren Verkehrswege, die für Kraftfahrzeuge grundsätzlich gesperrt sind, die aber über eine Ausnahmeregelung dergestalt verfügen, daß beispielsweise land- und forstwirtschaftliche Fahrzeuge diese Verkehrswege nutzen dürfen. In diesem Fall wäre mithin die Nutzung der beschriebenen Verkehrswege für alle Kraftfahrzeuge untersagt, für Kraftfahrzeuge, die über eine von der Beschränkung ausnehmenden Eigenschaft verfügen, hier also land- oder forstwirtschaftliche Fahrzeuge, hingegen zugelassen.

Weiter können beispielsweise Fahrtrichtungsbeschränkungen in Einbahnstraßen in besonders gekennzeichneten Einbahnstraßen für Fahrräder aufgehoben sein. Die Nutzung der Einbahnstraße entgegen der grundsätzlich freigegebenen Richtung ist in solchen Fällen für alle Kraftfahrzeuge untersagt, mithin besteht die beschränkende Eigenschaft in der Motorisierung der Fahrzeuge. Die Nutzung der Einbahnstraße entgegen der grundsätzlich freigegebenen Fahrtrichtung ist jedoch für über eine von der Beschränkung ausnehmende Eigenschaft, nämlich die Zugehörigkeit zur Kategorie der Fortbewegungsmittel Fahrrad, verfügende Fahrzeuge aufgehoben.

Eine Weiterbildung des Navigationsgeräts 1 zur Durchführung des erfindungsgemäßen Routenberechnungsverfahrens setzt eine Kommunikationsschnittstelle 15, die mit dem Navigationsgerät 1 verbunden ist, oder die Teil desselben ist, voraus.

Eine erste Ausführungsform dieser Weiterbildung richtet sich auf eine Offboard-Routenberechnung.

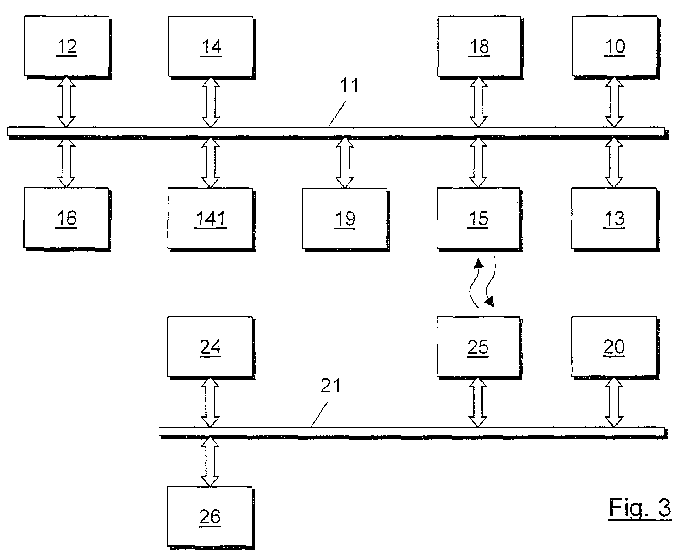

Bei dem in Figur 3 dargestellten Ausführungsbeispiel eines Navigationsgeräts zur Durchführung des erfindungsgemäßen Verfahrens ist eine solche Kommunikationsschnittstelle 15 an den Bus 11 des Navigationsgeräts 1 angeschlossen. Die Kommunikationsschnittstelle 15 ist in Form einer Luftschnittstelle, vorzugsweise in Form eines Mobilfunktelefons, ausgebildet.

Die Zentrale verfügt ihrerseits über eine zweite Kommunikationsschnittstelle 25, die zur Kommunikationsschnittstelle 15 des Navigationsgeräts 1 kompatibel ist, so daß der Aufbau einer Kommunikationsverbindung und ein Datenaustausch zwischen Kommunikationsschnittstelle 15 des Navigationsgeräts 1 und zweiter Kommunikationsschnittstelle 25 der Zentrale 2 möglich ist.

Die Zentrale 2 verfügt weiter über einen zweiten Massenspeicher 24 mit einer Datenbasis vergleichbar der des Massenspeichers 14 gemäß erstem Ausführungsbeispiel. Im zweiten Massenspeicher 24 der Zentrale sind Karteninformationen, insbesondere Informationen über die Lage markanter Punkte, wie zum Beispiel von Orten und Städten zusammen mit zugehörigen, die markanten Punkte eindeutig kennzeichnenden Ortsnamen abgelegt. Weiter sind im Massenspeicher Informationen über die markanten Punkte verbindende Verkehrswege, wie Autobahnen, Bundesstraßen und Straßen niederwertigerer Klassen beschreibende Verkehrswegeinformationen gespeichert. Die Verkehrswegeinformationen umfassen vorzugsweise Informationen über auf den Verkehrswegen zulässige Höchstgeschwindigkeits- oder Durchschnittsgeschwindigkeitswerte, darüber hinaus erfindungsgemäß Informationen über Einschränkungen betreffend die Nutzung der Verkehrswege. Diese können beispielsweise Einbahnstraßenregelungen, für bestimmte Fahrzeuge, wie Lkw, Gefahrenguttransporte usw. gesperrte Verkehrswege oder anderweitige Informationen umfassen.

Die Zentrale 2 verfügt weiter über eine zweite Steuerung 20 zur Steuerung der Betriebsabläufe innerhalb der Zentrale, der Steuerung der Kommunikation zwischen einem Navigationsgerät 1 und der Zentrale 2 und zur Durchführung des erfindungsgemäßen Routenberechnungsverfahrens.

Die beschriebenen Komponenten der Zentrale 2 kommunizieren miteinander über einen zweiten Bus 21, der ebenfalls durch die zweite Steuerung 20 gesteuert wird.

Zur Berechnung der Route von einem aktuellen Standort des Fortbewegungsmittels zu einem über die Benutzerschnittstelle 16 des Navigationsgeräts 1 des Fortbewegungsmittels eingegebenen Zielort werden die Standortinformation, die Zielortinformation und, sofern vorhanden, die eine Beschränkung der Nutzung von Verkehrswegen bedingende beschränkende Eigenschaft des Fortbewegungsmittels über die Kommunikationsschnittstelle 15 des Navigationsgeräts 1 an die Kommunikationsschnittstelle 25 der Zentrale gesandt. Dort erfolgt eine Präzisierung der Standortinformation des Fortbewegungsmittels mittels Map-Matching unter Zugrundelegung der Datenbasis im zweiten Massenspeicher 24. Anschließend erfolgt die Berechnung der Fahrtroute vom aktuellen Fahrzeugstandort zum Zielort unter Berücksichtigung von der Routenberechnung auszunehmender Verkehrswege wie oben beschrieben. Die berechnete Route wird anschließend über die Kommunikationsverbindung 15-25 zwischen Zentrale und Navigationsgerät an das Navigationsgerät 1 übertragen und dort in einem Routenspeicher 19 abgelegt.

Aufgrund der gespeicherten Route erfolgt anschließend die eigentliche Zielführung.

Da Routenberechnung und Map-Matching in der Zentrale 2 stattfinden, braucht der Massenspeicher 14 im Navigationsgerät 1 des Fortbewegungsmittels nicht vorhanden zu sein. Alternativ kann der Massenspeicher 14 vorgesehen sein, jedoch beispielsweise nur Städte- oder Ortsnamen enthalten und somit für die unterstützte Zielorteingabe herangezogen werden.

Eine zweite Ausführungsform gemäß dieser Weiterbildung der Erfindung richtet sich darauf, dass die beschränkende Eigenschaft vom Fortbewegungsmittel über die Kommunikationsverbindung 15-25 an die Zentrale 2 übermittelt wird, dass innerhalb der Zentrale die aufgrund der beschränkenden Eigenschaft von der Routenberechnung auszuschließenden Verkehrswegeinformationen aussortiert werden, und dass die verbliebenen Verkehrswegeinformationen, die durch die beschränkende Eigenschaft des Fortbewegungsmittels nicht betroffen sind, an das Fortbewegungsmittel übertragen und dort im Massenspeicher 14 abgelegt werden. Die Routenberechnung erfolgt dann im Navigationsgerät des Fortbewegungsmittels auf Grundlage der reduzierten Verkehrswegeinformationen. Beispielsweise werden im Fall des Gefahrenguttransporters in der Zentrale alle die Verkehrswege aussortiert, die für Gefahrenguttransporte gesperrt sind. Es werden dem Navigationsgerät dann nur solche Verkehrswege beschreibende Verkehrswegeinformationen übermittelt, die für Gefahrenguttransporte nutzbar sind. Die Routenberechnung erfolgt aufgrund des reduzierten Datenbestands, also nur auf Grundlage von Verkehrswegeinformationen, die für Gefahrenguttransporte nutzbare Verkehrswege beschreiben. Durch Naturschutzgebiete führende Straßen wären somit beispielsweise von der Routenberechnung ausgenommen.

Eine dritte Ausführungsform gemäß dieser Weiterbildung der Erfindung richtet sich darauf, dass die beschränkende Eigenschaft vom Fortbewegungsmittel über die Kommunikationsverbindung 15-25 der Zentrale übermittelt wird, in der Datenbasis 24 der Zentrale 2 aufgrund der beschränkenden Eigenschaft von der Routenberechnung auszunehmende Verkehrswegeinformationen ermittelt werden, dass auszunehmende Verkehrswegeinformationen kennzeichnende Informationen über die Kommunikationsverbindung 15-25 an das Fortbewegungsmittel übermittelt werden, und dass im Fortbewegungsmittel die Routenberechnung unter Ausnahme der durch die kennzeichnenden Informationen markierten Verkehrswegeinformationen erfolgt.

Im Falle des Gefahrenguttransports wird also die Information, dass es sich um einen Gefahrenguttransport handelt, an die Zentrale übermittelt. Dort wird diese Eigenschaftsinformation mit den Daten der Datenbasis abgeglichen dergestalt, dass alle Verkehrswege ermittelt werden, die für Gefahrentransporte nicht nutzbar sind. Die Daten dieser nicht nutzbaren Verkehrswege werden über die Kommunikationsverbindung 15-25 an das Fahrzeugnavigationsgerät übertragen und dort in einem Ausnahmespeicher 141 abgelegt. Die Routenberechnung im fortbewegungsmittelseitigen Navigationsgerät erfolgt dann unter Verwendung der im Massenspeicher 14 abgelegten Verkehrswegeinformationen unter Ausnahme der im Ausnahmespeicher 141 abgelegten Verkehrswege.

Werden zusätzlich Stand- und Zielort an die Zentrale übertragen, ist eine ortsselektive Filterung der an das fortbewegungsmittelseitige Navigationsgerät zu übertragenden Informationen dergestalt möglich, dass nur solche von der Routenberechnung auszunehmenden Verkehrswegeinformationen an das Navigationsgerät übertragen werden, die aufgrund der Lage der durch sie beschriebenen Verkehrswege für eine Routenberechnung überhaupt in Betracht kommen.

Die drei zuletzt beschriebenen Ausführungsformen, welche für die Routenberechnung extern zur Verfügung gestellte Verkehrswegeinformationen verwenden oder eine externe Routenberechnung durchführen, ermöglichen weiterhin die Berücksichtigung ständig aktualisierter Verkehrswegeinformationen, die der Zentrale über eine dritte Kommunikationsschnittstelle 26 zugeführt werden. Es kann sich dabei um ein infolge Straßenneubauten oder-Stillegungen aktualisiertes Verkehrswegenetz ebenso handeln, wie beispielsweise um infolge Verkehrsbehinderungen erhöhte Streckenwiderstände auf bestimmten Verkehrswegen.

## Patentansprüche

1. Verfahren zur Berechnung einer Route von einem Start- zu einem Zielort für ein Fortbewegungsmittel unter Verwendung Verkehrswege beschreibender Verkehrswegeinformationen, **dadurch gekennzeichnet, dass** in Abhängigkeit einer Eigenschaft des Fortbewegungsmittels, die eine Beschränkung hinsichtlich der Benutzung bestimmter Verkehrswege begründet, eine Teilmenge der Verkehrswegeinformationen von der Routenberechnung ausgenommen wird.

2. Verfahren nach Anspruch 1, **dadurch gekennzeichnet, dass** die von der Routenberechnung ausgenommene Untermenge von Verkehrswegeinformationen solche Verkehrswege umfaßt, deren Benutzung aufgrund der beschränkenden Eigenschaft des Fortbewegungsmittels ausgeschlossen ist.

3. Verfahren nach einem der Ansprüche 1 oder 2, **dadurch gekennzeichnet, dass** sich die beschränkende Eigenschaft des Fortbewegungsmittels aus dessen Beladung ergibt.

4. Verfahren nach einem der vorhergehenden Ansprüche, **dadurch gekennzeichnet, dass** sich die beschränkende Eigenschaft des Fortbewegungsmittels aus seinen Abmessungen, insbesondere seiner Höhe, Breite oder Länge oder einer Kombination dieser Merkmale, und/oder seinem Gewicht ergibt.

5. Verfahren nach einem der vorhergehenden Ansprüche, **dadurch gekennzeichnet, dass** sich die Beschränkung hinsichtlich der Benutzung bestimmter Verkehrswege auf alle Fortbewegungsmittel oder alle Fortbewegungsmittel mindestens einer bestimmten Kategorie erstreckt, die nicht über eine von der Beschränkung ausnehmende Eigenschaft verfügen.

6. Verfahren nach einem der vorhergehenden Ansprüche, **dadurch gekennzeichnet, dass** die beschränkende Eigenschaft vom Fortbewegungsmittel über eine Schnittstelle einer Zentrale übermittelt wird, dass aufgrund der in einer Datenbasis der Zentrale verfügbaren Verkehrswege beschreibenden Verkehrswegeinformationen eine Fahrtroute unter Berücksichtigung der beschränkenden Eigenschaft berechnet wird, und dass die berechnete Fahrtroute beschreibende Routeninformationen über die Schnittstelle an das Fortbewegungsmittel übermittelt werden.

7. Verfahren nach einem der Ansprüche 1 bis 5, **dadurch gekennzeichnet, dass** die beschränkende Eigenschaft vom Fortbewegungsmittel über eine Schnittstelle einer Zentrale übermittelt wird, dass nach Abzug der Teilmenge von Verkehrswegeinformationen von in einer Datenbasis der Zentrale verfügbaren Verkehrswege beschreibenden Verkehrswegeinformationen verbleibende Verkehrswegeinformationen zur Routenberechnung über die Schnittstelle an das Fortbewegungsmittel übermittelt werden.

8. Verfahren nach einem der Ansprüche 1 bis 5, **dadurch gekennzeichnet, dass** die beschränkende Eigenschaft vom Fortbewegungsmittel über eine Schnittstelle einer Zentrale übermittelt wird, in einer Datenbasis der Zentrale, die über Verkehrswege beschreibende Verkehrswegeinformationen verfügt, aufgrund der beschränkenden Eigenschaft von der Routenberechnung auszunehmende Verkehrswegeinformationen ermittelt werden, dass auszunehmende Verkehrswegeinformationen kennzeichnende Informationen über die Schnittstelle an das Fortbewegungsmittel übermittelt werden, und dass im Fortbewegungsmittel die Routenberechnung unter Ausnahme der durch die kennzeichnenden Informationen markierten Verkehrswegeinformationen erfolgt.

9. Verfahren nach einem der vorhergehenden Ansprüche, **dadurch gekennzeichnet, dass** die beschränkende Eigenschaft durch eine Sensorik des Fortbewegungsmittels automatisch erfaßt wird.

10. Verfahren nach einem der vorgehenden Ansprüche 1 bis 8, **dadurch gekennzeichnet, dass** die beschränkende Eigenschaft durch eine bezüglich des Fortbewegungsmittels externe Sensorik automatisch erfaßt und über eine Schnittstelle dem Fortbewegungsmittel mitgeteilt wird.

11. Verfahren nach einem der vorhergehenden Ansprüche 1 bis 8, **dadurch gekennzeichnet, dass** die beschränkende Eigenschaft fest oder, im Falle wechselnder beschränkender Eigenschaften eigenschaftsabhängig, in einen Speicher des Fortbewegungsmittels einprogrammiert wird.
